(19) Europäisches Patentamt
European Patent Office
Office européen des brevets

(11) **EP 3 057 054 A1**

## (12) EUROPEAN PATENT APPLICATION

(43) Date of publication:
**17.08.2016 Bulletin 2016/33**

(51) Int Cl.:
**G06Q 30/00** (2012.01)    **G06Q 30/06** (2012.01)
**G06Q 40/02** (2012.01)    **G06Q 20/40** (2012.01)

(21) Application number: **15290030.4**

(22) Date of filing: **11.02.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Amadeus S.A.S.**
**06410 Biot (FR)**

(72) Inventors:
• **Canis, Laure**
**06300 Nice (FR)**

• **Ramsawmy, Jeremie**
**06200 Nice (FR)**
• **Andrevon, Thibaud**
**06220 Vallauris (FR)**
• **Florimond, Cedric**
**06220 Vallauris (FR)**

(74) Representative: **Samson & Partner Patentanwälte mbB**
**Widenmayerstraße 6**
**80538 München (DE)**

(54) **Using revenue management to improve payment fraud screening**

(57)    Methods, systems, and computer program products for screening a request for a transaction to purchase a travel service. Based on one or more of a probability of fraud for the transaction, a probability distribution for receiving a chargeback with respect to time if the request is accepted, a probability distribution with respect to time for completing a security check, a probability that the travel service will be rebooked if the request is denied, and a bid-price for a travel service, a revenue management system determines a future revenue impact for accepting, denying, or requesting a security check on the request. The future revenue impact is used to adjust a total cost of fraud for the transaction. The revenue management system may then determine whether the request should be accepted, denied, or subjected to the security check based on the expected future revenue impact and the expected cost of fraud.

FIG. 1

EP 3 057 054 A1

**Description**

BACKGROUND

The invention generally relates to computers and computer systems and, in particular, to methods, systems, and computer program products that screen transactions for fraud.

In the travel industry, airline tickets are often sold through an indirect seller, such as a travel agency. The indirect seller will typically check for available flights or other travel services that satisfy a traveler's travel plans and, once matching services are found, book the services for the traveler and collect payment. Payment is often collected by charging the cost of the travel services being purchased to a credit card account provided by the traveler, with the indirect seller or validating carrier acting as a merchant.

Credit card transactions typically comprise a two-stage process of authorization and settlement. At the time of the transaction, transaction information such as the purchase amount, identity of the merchant, credit card account number and expiration date, is transmitted from the merchant to an issuing bank. The issuing bank may then check the account to verify that the credit card is valid, and that the credit limit is sufficient to allow the transaction. If the bank approves the transaction, the merchant completes the transaction and issues a ticket to the traveler. To receive payment, the merchant may send a batch of approved authorizations to an "acquiring bank" at the close of the business day. The acquiring bank may then reconcile and transmit the authorizations to the issuing banks, typically via a card network or clearing house, and deposit funds in the merchant's account. Funds are then transferred from the issuing bank to the acquiring bank, and a bill sent to the cardholder by the issuing bank.

Unfortunately, credit cards are often used to fraudulently purchase airline tickets by unscrupulous individuals who utilize improperly obtained or stolen credit cards to make unauthorized purchases. When the true cardholder notices the unauthorized purchase, they may dispute the charge with the issuing bank. This typically results in a "chargeback" being issued to the merchant for the cost of the transaction. Chargebacks can be received up to several months after the transaction occurred, by which time the travel services have normally been used. Fraudulent credit card transactions thus cause substantial harm to merchants, who generally cannot recover the costs of the travel services.

Because the travel industry attracts fraudulent activity, and merchants are often responsible for losses due to fraud, decreasing costs due to fraud is a priority for merchants. Fraud losses may represent a significant fraction of net sales, and may have an even larger impact on Earnings Before Interest and Taxes (EBIT). Moreover, the overall attempted fraud rate is expected to grow as fraudsters target the weakest merchants.

Thus, improved systems, methods, and computer program products for analyzing transactions to detect fraud are needed to reduce the impact of fraudulent charges and reduce losses incurred by merchants and travel service providers due to fraudulent purchases of travel services.

SUMMARY

In an embodiment of the invention, an apparatus is provided for processing a request to book a travel service having a price and a perish time. The apparatus includes a processor and a memory. The memory includes instructions that, when executed by the processor, cause the apparatus to receive the request to book the travel service for a traveler. The apparatus determines a remaining inventory of the travel service if the request is accepted, a bid-price of the travel service based on the remaining inventory and an amount of time between a current time and the perish time, and a probability that a chargeback will be received if the request is accepted. The apparatus further determines a future revenue impact of accepting the request that comprises a mathematical product of the probability and the bid-price and corresponds to a scenario wherein the request is fraudulent. Based at least in part on the future revenue impact, the apparatus determines a composite revenue impact of accepting the request. The apparatus further determines whether to accept the request, reject the request, or perform a security check based at least in part on the composite revenue impact.

In another embodiment of the invention, a method of processing the request to book the travel service having the price and the perish time is provided. The method includes receiving the request to book the travel service for the traveler. The method determines the remaining inventory of the travel service if the request is accepted, the bid-price of the travel service based on the remaining inventory, the amount of time between the current time and the perish time, and the probability that the chargeback will be received if the request is accepted. The method further includes determining the future revenue impact of accepting the request that comprises the mathematical product of the probability and the bid-price and corresponds to the scenario wherein the request is fraudulent. Based at least in part on the first future revenue impact, the method further determines the composite revenue impact of accepting the request. The method further determines whether to accept the request, reject the request, or perform the security check based at least in part on the composite revenue impact.

In another embodiment of the invention, a computer program product is provided that includes a non-transitory computer-readable storage medium including instructions. The instructions are configured, when executed by the processor, to cause the processor to receive the request to book the travel service for the traveler. The instructions cause processor to determine the remaining inventory of the travel service if the request is accepted, the bid-price of the travel service based on the remaining inventory and the amount of time between the current time and the perish time, and the probability that the chargeback will be received if the request is accepted. The instructions further cause the processor to determine the future revenue impact of accepting the request that comprises the mathematical product-of the probability and the bid-price and corresponds to the scenario wherein the request is fraudulent. Based at least in part on the future revenue impact, the instructions cause the processor to determine the composite revenue impact of accepting the request. The instructions further cause the processor to determine whether to accept the request, reject the request, or perform the security check based at least in part on the composite revenue impact.

BRIEF DESCRIPTION OF THE SEVERAL VIEWS OF THE DRAWINGS

The accompanying drawings, which are incorporated in and constitute a part of this specification, illustrate various embodiments of the invention and, together with the general description of the invention given above, and the detailed description of the embodiments given below, serve to explain the embodiments of the invention.

FIG. 1 is a diagrammatic view of an exemplary operating environment including a plurality of computing systems in communication via a network.
FIG. 2 is a diagrammatic view of an exemplary computing system of FIG. 1.
FIG. 3 is a diagrammatic view of a revenue management system including a pricing module, an inventory module, and a fraud module.
FIG. 4 is a graphical view depicting a relationship between a bid-price and an inventory of a travel service for a booking class having a yield.
FIG. 5 is a graphical view depicting a relationship between the bid-price and the remaining inventory of the travel service for another booking class having a different yield.
FIG. 6 is a diagrammatic view of a table depicting a total cost of fraud and revenue impact for a plurality of transaction scenarios.

DETAILED DESCRIPTION

Embodiments of the invention are directed to methods and systems that determine whether to accept or deny a transaction, such as a transaction to purchase a travel service, by determining a cost of fraud for the transaction and an expected future revenue impact of the decision. Embodiments of the invention may be implemented by a revenue management system comprising one or more networked computers or servers. The networked computers may include a Global Distribution System (GDS), and may provide processing and database functions for travel-related systems and modules that analyze transactions for fraud, determine available inventory for the travel service, and price the travel service.

The revenue management system may determine an optimal number of seats that should be made available for each booking-class based on the carrier's capacity to provide inventory and a forecast future booking demand. For example, on high demand flights, the revenue management system may limit availability of seats for booking-classes having discounted fares to increase overall yield and revenue based on a bid-price calculation. For low demand flights, the revenue management system may determine that lower cost seats should be made available to sell empty seats, thereby increasing load factors and revenue in response to a low bid-price.

The revenue management system may determine an expected future revenue impact of accepting, denying, or requesting a security check on a transaction based at least in part on the bid-price for the travel service. This expected future revenue impact may be further based on a probability of fraud, probability distributions for receiving a chargeback or completing a security check, and a probability that the travel service will be rebooked if the transaction is denied. The revenue management system may combine the expected future revenue impact with the cost of fraud to determine whether the transaction should be accepted, denied, or subjected to a security check.

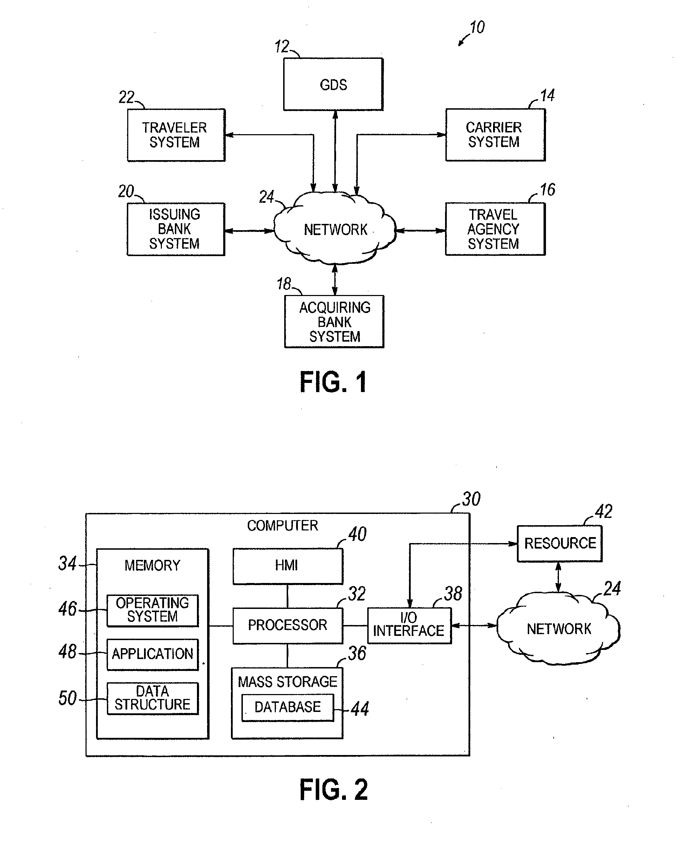

Referring now to FIG. 1, an operating environment 10 in accordance with an embodiment of the invention may include a Global Distribution System (GDS) 12, one or more travel service provider systems, such as carrier system 14, one or more indirect seller systems, such as travel agency system 16, an acquiring bank system 18, an issuing bank system 20, and a traveller system 22. Each of the GDS 12, carrier system 14, travel agency system 16, acquiring bank system 18, issuing bank system 20, and traveler system 22 may communicate through a network 24. The network 24 may include one or more private or public networks (e.g., the Internet) that enable the exchange of data.

The GDS 12 may be configured to facilitate communication between the carrier system 14 and travel agency system 16 by enabling travel agents, validating carriers, or other indirect sellers to book reservations on the carrier system 14 via the GDS 12. The GDS 12 may maintain links to a plurality of carrier systems via the network 24 that enable the GDS 12 to route reservation requests from the validating carrier or travel agency to a corresponding operating carrier. The carrier system 14 and travel agency system 16 may thereby book flights on multiple airlines via a single connection to the GDS 12.

The carrier system 14 may include a Computer Reservation System (CRS) that enables the GDS 12 or travel agency system 16 to reserve and pay for airline tickets. The carrier system 14 may also interact with other carrier systems (not shown), either directly or through the GDS 12, to enable a validating carrier to sell tickets for seats provided by the operating carrier. The operating carrier may then bill the validating carrier for the services provided.

The travel agency system 16, acquiring bank system 18, and issuing bank system 20 may be configured to exchange data necessary to execute the transaction. To this end, at the time of the transaction, the travel agency system 16 may transmit an authorization request to the issuing bank system 20. In response to receiving the authorization request, the issuing bank system 20 may verify the credit card account is valid, and that the account has a sufficient remaining credit to cover the amount of the transaction. The issuing bank system 20 may then transmit an authorization response to the travel agency system 16. This response may indicate that the transaction has been approved, declined, or may request additional information.

Once the transaction is complete, the travel agency system 16 may transmit data characterizing the transaction to the acquiring bank system 18. This data may be transmitted individually, or as part of a batch file, at a capture time $t_C$. The capture time $t_C$ may occur periodically, such as at the end of the business day on which the transaction was conducted. The acquiring bank system 18 may then deposit funds into an account of the travel agency, and recover funds from the corresponding issuing banks of the credit cards used to purchase the travel services.

The traveler system 22 may comprise a desktop computer, laptop computer, tablet computer, smart phone, or any other suitable computing device. The traveler may use the traveler system 22 to search for and book travel services by accessing the GDS 12, carrier system 14, travel agency system 16, or any other suitable system though the network 24. For example, the traveler may launch a browser application, and use the browser application to search for travel services on a website provided by a travel services provider or reseller. The traveler may then book a selected travel service by entering payment information into the website.

Referring now to FIG. 2, the GDS 12, carrier system 14, travel agency system 16, acquiring bank system 18, issuing bank system 20, and traveler system 22 of operating environment 10 may be implemented on one or more computer devices or systems, such as exemplary computer system 30. The computer system 30 may include a processor 32, a memory 34, a mass storage memory device 36, an input/output (I/O) interface 38, and a Human Machine Interface (HMI) 40. The computer system 30 may also be operatively coupled to one or more external resources 42 via the network 24 or I/O interface 38. External resources may include, but are not limited to, servers, databases, mass storage devices, peripheral devices, cloud-based network services, or any other suitable computer resource that may used by the computer system 30.

The processor 32 may include one or more devices selected from microprocessors, micro-controllers, digital signal processors, microcomputers, central processing units, field programmable gate arrays, programmable logic devices, state machines, logic circuits, analog circuits, digital circuits, or any other devices that manipulate signals (analog or digital) based on operational instructions that are stored in the memory 34. Memory 34 may include a single memory device or a plurality of memory devices including, but not limited to, read-only memory (ROM), random access memory (RAM), volatile memory, non-volatile memory, static random access memory (SRAM), dynamic random access memory (DRAM), flash memory, cache memory, or any other device capable of storing information. The mass storage memory device 36 may include data storage devices such as a hard drive, optical drive, tape drive, volatile or non-volatile solid state device, or any other device capable of storing information.

The processor 32 may operate under the control of an operating system 46 that resides in memory 34. The operating system 46 may manage computer resources so that computer program code embodied as one or more computer software applications, such as an application 48 residing in memory 34, may have instructions executed by the processor 32. In an alternative embodiment, the processor 32 may execute the application 48 directly, in which case the operating system 46 may be omitted. One or more data structures 50 may also reside in memory 34, and may be used by the processor 32, operating system 46, or application 48 to store or manipulate data.

The I/O interface 38 may provide a machine interface that operatively couples the processor 32 to other devices and systems, such as the network 24 or external resource 42. The application 48 may thereby work cooperatively with the network 24 or external resource 42 by communicating via the I/O interface 38 to provide the various features, functions, applications, processes, or modules comprising embodiments of the invention. The application 48 may also have program code that is executed by one or more external resources 42, or otherwise rely on functions or signals provided by other system or network components external to the computer system 30. Indeed, given the nearly endless hardware and software configurations possible, persons having ordinary skill in the art will understand that embodiments of the invention may include applications that are located externally to the computer system 30, distributed among multiple computers or other external resources 42, or provided by computing resources (hardware and software) that are provided as a service over the network 24, such as a cloud computing service.

The HMI 40 may be operatively coupled to the processor 32 of computer system 30 in a known manner to allow a user to interact directly with the computer system 30. The HMI 40 may include video or alphanumeric displays, a touch screen, a speaker, and any other suitable audio and visual indicators capable of providing data to the user. The HMI 40 may also include input devices and controls such as an alphanumeric keyboard, a pointing device, keypads, pushbuttons, control knobs, microphones, etc., capable of accepting commands or input from the user and transmitting the entered input to the processor 32.

A database 44 may reside on the mass storage memory device 36, and may be used to collect and organize data used by the various systems and modules described herein. The database 44 may include data and supporting data structures that store and organize the data. In particular, the database 44 may be arranged with any database organization or structure including, but not limited to, a relational database, a hierarchical database, a network database, or combinations thereof. A database management system in the form of a computer software application executing as instructions on the processor 32 may be used to access the information or data stored in records of the database 44 in response to a query, where a query may be dynamically determined and executed by the operating system 46, other applications 48, or one or more modules.

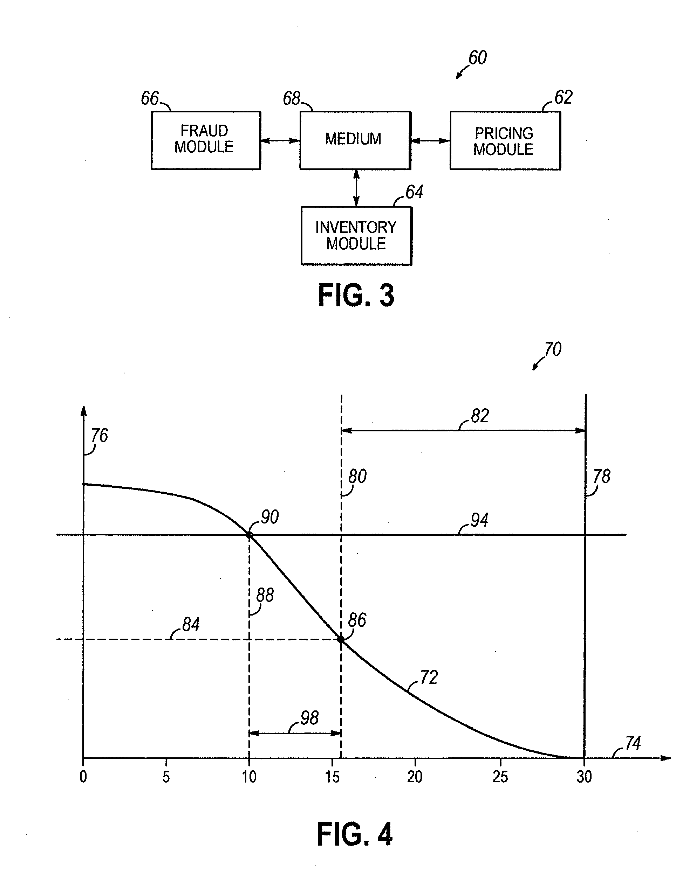

Referring now to FIG. 3, a revenue management system 60 may include a pricing module 62, an inventory module 64, and a fraud module 66. The pricing module 62, inventory module 64, and fraud module 66 may be provided by one or more suitable computing systems, and may be operatively coupled through a medium 68, such as a communication network or a shared memory space. Suitable computing systems may include, for example, the GDS 12, carrier system 14, travel agency system 16, or any other suitable computer system, such as a system operated by a travel service provider or travel service reseller.

Revenue management may include pricing and inventory allocation processes. Pricing may be performed by the pricing module 62, and may refer to a process of determining fare or other pricing levels for the travel service based on various combinations of services and restrictions comprising the travel service. The travel service pricing may be for a particular market, which in the case of air travel may be defined by an origination-destination pair. Inventory management may be performed by the inventory module 64, and may refer to a process of determining an inventory, such as a number of seats, to provide in the market for each of one or more classes of service.

The overall goal of the revenue management system 60 may be to assign prices and market inventory across the available booking-classes to maximize overall revenue. To this end, the revenue management system 60 may forecast an expected demand for the travel service (e.g., demand for seats on each route of a carrier), and attempt to maximize revenue by adjusting the amount of remaining inventory to offer in each booking class at a given point in time in response to this demand.

The fraud module 66 may estimate the total cost of fraud $C_F$, which may be an expected or estimated cost of fraud for the transaction. The total cost of fraud $C_F$ may include, for each transaction, the cost to the merchant of reimbursing a fraudulently authorized transaction, the value of a ticket that was fraudulently purchased, the cost of processing a chargeback plus any chargeback fees, the cost of any security checks that were performed (e.g., manual review, amortized cost of implementation and cost per transaction for a security check or fraud screening implementation (such as 3-D SECURE™), lost gross margin for sales that are not made because a non-fraudulent transaction is denied, and increases in the merchant service fee, which may vary depending on the fraud strategy implemented and chargeback volume for the merchant.

The total cost of fraud $C_F$ may be subtracted from an amount $A$ of the transaction (e.g., the price of the ticket) to determine an expected impact on profit. To determine the total cost of fraud $C_F$, some approximations may be made to estimate the financial impact of accepting, denying, or requesting a security check on the transaction being evaluated. For example, $C_F$ if the transaction is accepted, or $C_F(accept)$ may be provided by:

$$C_F(accept) = P \times (A + C_{CB})$$

where P is the probability of fraud, $A$ represents the price of the ticket, and $C_{CB}$ represents the cost of chargeback fees. Rejecting or denying the transaction may also have a total cost of fraud associated with loss of revenue, and may be provided by:

$$C_F(deny) = (1 - P) \times C_{LS}$$

where $C_{LS}$ is the cost due to lost sales. The cost due to lost sales may in turn be provided by:

$$C_{LS} = A \times GM \times P_L$$

where $GM$ is the gross margin, and $P_L$ represents a probability of losing the sale by denying the transaction. That is, $P_L$ may represent the probability that the traveler in question does not purchase the ticket using some other form of payment or at a later time.

The above approximations for the total cost of fraud $C_F$ may provide a basis for making decisions regarding whether to accept, deny, or request review of a transaction. For example, the total cost of fraud $C_F$ may be determined for each of a plurality of scenarios involving accepting, rejecting, or performing a security check on a request to book travel service for both fraudulent and non-fraudulent cases. The scenario that produces the lowest total cost of fraud $C_F$ may then be used to determine how the request should be processed. In some embodiments of the invention, the total cost of fraud $C_F$ may be adjusted based on additional probabilities.

For example, a probability $P_{DF}$ may be determined that if a fraudulent transaction is accepted, the fraud will be discovered in time to prevent use of the travel service, e.g., by receiving a chargeback before the flight. Discovering that the accepted transaction is fraudulent may provide an opportunity to resell the ticketed travel service, although the price of the ticket A for the resold travel service may differ from the price of the ticket A of the original sale. If unaccounted for, the probability $P_{DF}$ may cause the cost of fraud $C_F$(accept) to be overestimated.

Another probability $P_{RS}$ may be determined that if the transaction is rejected, the travel service will be resold to a new traveler. If unaccounted for, the probability $P_{RS}$ may cause the cost of fraud for rejecting the transaction $C_F$(deny) to be overestimated. The cost of fraud $C_F$(review) may also take into account delays caused by requesting the security check. For example, if manual review is requested, and the transaction ultimately rejected a period of time later (e.g., after one or more days), there may be an opportunity cost to blocking the seat while the manual review is performed even though the seat is eventually returned to inventory.

Accounting for revenue from reselling the travel service after a transaction is rejected or a fraudulent transaction is discovered, and the opportunity cost of blocking a seat during the security check, may improve the accuracy of the projected revenue impact. Improved accuracy in determining projected revenue may, in turn, improve decision making by merchants with regard to accepting, denying, or reviewing transactions as compared to using a cost of fraud $C_F$ alone without accounting for these expected future impacts on revenue.

The travel service being sold may have a limited inventory and a time by which the travel service must be sold to avoid loss of that inventory, or a "perish time" $t_P$. For example, a carrier may have a maximum number of seats available in each of one or more cabins or classes for a specific market or flight. Once an airplane has left the gate, the profit from unsold seats can never be regained, and is said to have perished or spoiled. The actual perish time $t_P$ may occur prior to departure to account for the time required for processing the ticket, check in, security screening, and boarding. Travel services other than airline seats may also have a limited inventory and perish time. For example, a hotel may have a fixed number of rooms available, or an attraction may have a limited number of tickets that may be sold for a given performance. In any case, unsold hotel rooms, rental cars, or attraction tickets may also perish, as revenue cannot be recovered for periods where rooms sat vacant, cars sat unrented, or attractions were not fully attended.

The opportunity cost of not selling the travel service may be a current expected value of selling the travel service at some time in the future, and may vary depending on the remaining inventory and the remaining time until the service perishes. This opportunity cost, or bid-price, may represent a probabilistic expected revenue for the next seat offered to sell for a given remaining inventory and amount of time until the service perishes. To maximize revenue for this limited inventory, the inventory module 64 may open and close certain booking classes based on the bid-price. This gating strategy may be based on opportunity costs computed at an "optimization time" $t_{OPT}$, which may in turn be used to determine availability for each booking class. Plotting the opportunity cost verses the seat inventory $n$ at time $t$ may yield a bid-price vector $BP(n, t)$. Thus, the bid-price vector $BP(n, t)$ may provide a minimum price the carrier should accept for booking the next available seat for a given remaining inventory $n$ and time $t$.

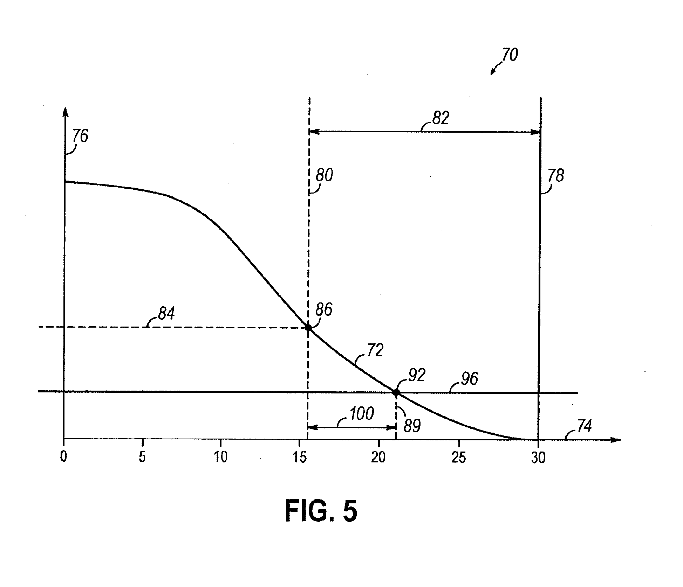

Referring now to FIGS. 4 and 5, a graphical diagram 70 is presented depicting an exemplary bid-price vector represented by plot line 72. As applied to airline flights, the bid-price vector may define a relationship between the bid-price and the inventory level of a cabin for a particular flight leg at a specific optimization time $t_{OPT}$. The graphical diagram 70 further depicts a horizontal axis 74, which may represent an inventory $n$ of the travel service, and a vertical axis 76, which may represent the bid-price for a given remaining inventory at the optimization time $t_{OPT}$ for the travel service. The travel service provider may have an initial inventory 78 to provide the travel service. For example, in the case of an airline, the initial inventory 78 may be a number of seats (e.g., 30) in an aircraft for a specific class of cabin, e.g., first, business, or coach class. A remaining inventory 80 may reflect an amount of unsold inventory (e.g., the number of seats in the cabin that have not been booked). Thus, the distance between the initial inventory 78 and remaining inventory 80 may represent an amount of the initial inventory sold 82 (e.g., the number of seats in the cabin that have been booked).

A bid-price 84 may be indicated by an intersection point 86 between the remaining inventory 80 and the plot line 72. As can be seen from the path of the plot line 72, the bid-price of the travel service may tend to increase as the remaining inventory 80 decreases. That is, the opportunity cost of the next available seat may increase as the number of remaining seats in the cabin decreases. To determine how many seats should be made available from the remaining inventory 80, the revenue management system 60 may determine a remaining inventory 88, 89 corresponding to an intersection point 90, 92 between the plot line 72 and a yield curve 94, 96 for the booking class being evaluated. The yield curve 94, 96 may reflect an expected (e.g., average) revenue per ticket sold for the booking class. If the remaining inventory 80 generates a bid-price 84 that is lower than, or below, the yield curve, as depicted by yield curve 94 in FIG. 4, legitimate requests to book the travel service should be accepted. In contrast, if the bid-price 84 is above the yield curve, as depicted by the yield curve 96 in FIG. 5, the booking class should be closed since the opportunity cost of the next seat exceeds the price for which the ticket is selling.

To this end, the revenue management system 60 may determine the amount of remaining inventory to make available in each booking class based on the bid-price for the cabin and the yield for the booking class. For example, a horizontal distance 98 between the remaining inventory 80 and the remaining inventory 88 corresponding to intersection point 90 may indicate an amount of the remaining inventory 80 that should be made available for the booking class associated with yield curve 94. For the exemplary booking class depicted in FIG. 4, the horizontal distance 98 may indicate that six of the remaining sixteen seats should be made available for this booking class. The ten remaining unavailable seats may be held in reserve until the yield price exceeds the bid-price, or made available in another booking class having a higher yield. In contrast, the yield curve 96 of the booking class depicted in FIG. 5 is below the bid-price 84, indicating a "negative availability" 100 that corresponds to a number of cancellations that would be needed to re-open this booking class.

At the optimization time $t_{OPT}$, the revenue management system 60 may determine the bid-price vector for each cabin or class of service for each flight leg being evaluated. The bid-price vector determination may be based on forecasts of demand, booking probabilities, average revenue per booking class (i.e., the yield), or any other suitable parameter. The optimization time $t_{OPT}$ may occur periodically (e.g., one or more times a day) to keep the bid-price vector sufficiently refreshed or current. To this end, the optimization time $t_{OPT}$ may vary depending on values of selected parameters, such as the amount of time between the current time to and the perish time $t_P$, or the volatility of the market. The bid-price vector may be updated more frequently under conditions that are expected to cause the bid-price vector to vary more rapidly with respect to time. For example, the bid-price vector may vary more rapidly as the current time to approaches the perish time $t_P$ for the travel service, i.e., as the interval between the current time to and the perish time $tp$ shrinks.

In response to receiving a request to book a ticket, the revenue management system 60 may determine availability based on the yield for the booking class and current bid-price determined as described above. If the yield for the booking class is greater than the bid-price for the next available seat, the requested seat may be shown as available. In contrast, if the yield for the booking class is lower than the bid-price, the booking class may be shown as closed.

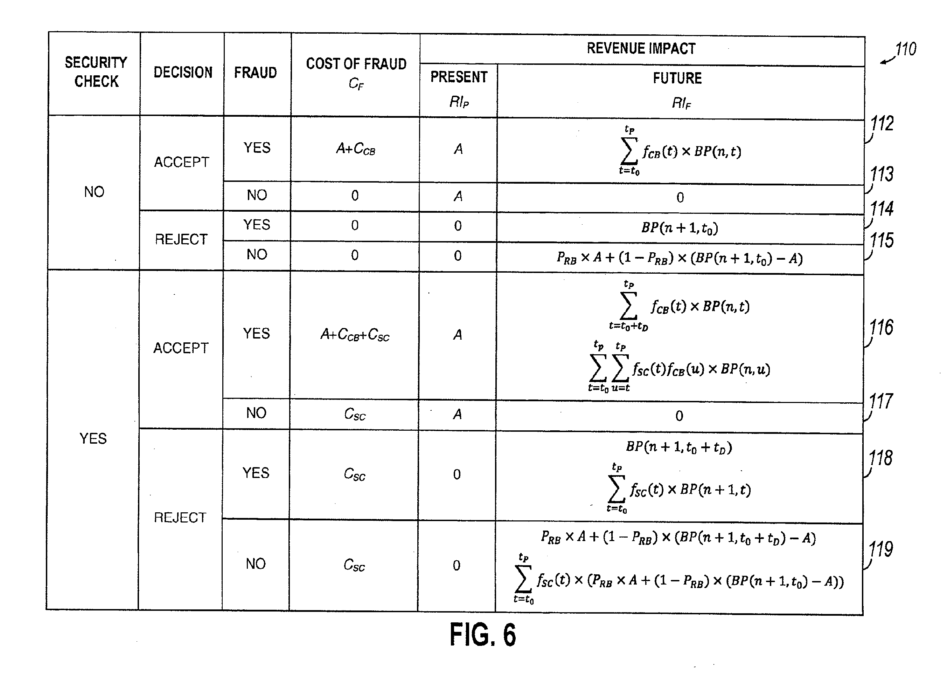

Referring now to FIG. 6, a table 110 is presented depicting possible costs of fraud $C_F$, present revenue impacts $RI_P$, and expected future revenue impacts $RI_F$ of the merchant selling the ticket. These costs of fraud $C_F$ and revenue impacts $RI_P$, $RI_F$ may depend on how the merchant responds to the proposed transaction (e.g., accepting or rejecting the transaction with or without performing a security check), and on whether the transaction is fraudulent. If the transaction is accepted, the present revenue impact $RI_P$ for the merchant may be a positive amount $A$ equal to the amount of the transaction, e.g., the price of the travel service. In cases where the proposed transaction is subjected to an additional security check, such as a manual review, the revenue impact may be equal to the amount $A$ minus a cost $Csc$ of performing the security check. If the transaction is ultimately refused, the present revenue impact may be the cost $Csc$ of any additional security checks performed prior to refusing the transaction. That is, the present revenue impact may be negative.

The future revenue impact $RI_F$ for the merchant may depend on whether the transaction ultimately proves to be legitimate or fraudulent. If the transaction is legitimate, the future revenue impact $R_{IF}$ for the merchant may be zero. That is, the merchant may not receive a chargeback associated with the transaction, nor have a chance to resell the ticket. If the proposed transaction is accepted and proves to be fraudulent (e.g., the ticket was purchased using a stolen credit card), the amount $A$ of the transaction may be credited back to the true account holder by the issuing bank. The issuing back may then bill the acquiring bank, which may in turn deduct the amount $A$ of the transaction plus the cost $C_{CB}$ of any chargeback fees from the account of the merchant. Thus, if an accepted transaction is fraudulent, the merchant may experience a negative future revenue impact $RI_F$, or liability $L$, equal to the amount of the transaction $A$ of the ticket plus the cost $C_{CB}$ of chargeback fees.

Table 110 depicts the cost of fraud $C_F$, the present revenue impact $RI_P$, and the future revenue impact $RI_F$ that may occur for each of a plurality of transaction scenarios 112-119. As can be seen, the present revenue impact $RI_P$ in the exemplary scenarios 112-119 is equal to the amount A of the transaction if the transaction is accepted, and equal to 0 if the transaction is rejected. The future revenue impact $RI_F$ may vary by scenario in dependence on a plurality of factors. For scenarios in which a legitimate transaction is accepted (e.g., scenarios 113, 117), the future revenue impact $RI_F$ may be 0 based on an expectation that the travel service will remain sold. In scenarios in which a fraudulent transaction is accepted, or the transaction request is rejected, factors used to determine the future revenue impact $RI_F$ may include a remaining inventory $n$ of the carrier (i.e., the number of unsold seats, including the seat for the pending transaction), a current time $t_0$ at which the request for the transaction is received, the perish time $t_P$ for the travel service, a probability distribution with respect to time for receiving a chargeback on the transaction or "chargeback probability" $f_{CB}(t)$, a probability distribution with respect to time for the amount of time to complete the security check or "delay probability" $f_{SC}(t)$, a bid-price vector $BP(n, t)$ that provides the opportunity cost of a seat for a given remaining time $t$ and remaining inventory $n$, a probability $P_{RB}$ that a rejected traveler will rebook the travel service at a later time, and a probability $(1 - P_{RB})$ that the rejected traveler will not rebook the travel service at a later time.

The remaining inventory of the carrier may change depending on whether the current transaction is accepted or rejected. Because the remaining inventory $n$ is the inventory remaining after the seat for the pending transaction is sold, if the pending transaction request is rejected, the opportunity cost for the next passenger may be determined using a remaining inventory of $n + 1$. That is, for scenarios in which the transaction request is rejected, the opportunity cost for the unsold travel service may be determined using the bid-price vector $BP(n + 1, t)$, as depicted by table 110.

Scenario 112 may relate to cases in which a fraudulent transaction request is accepted without performing the security check. In scenario 112, a chargeback may be received prior to the perish time $t_P$, which may provide an opportunity to block use of the travel service by the fraudster and resell the travel service to another traveler. The future revenue impact $RI_F$ of blocking the use of the travel service may be the opportunity cost for the travel service at the time $t_{CB}$ the chargeback is received, or $BP(n, t_{CB})$. However, at the time to the transaction request is accepted, neither the fact that the transaction is fraudulent, nor the time $t_{CB}$ at which the chargeback will be received, is normally known. In an embodiment of the invention, the time $t_{CB}$ may be determined based on a historical average amount of time between accepting a fraudulent transaction and receiving a chargeback. In an alternative embodiment of the invention, the future revenue impact $RI_F$ may be determined at time $t_0$ using the chargeback probability $f_{CB}(t)$ rather than a specific value for time $t_{CB}$. Specifically, the future revenue impact $RI_F$ may be determined by summing the mathematical product of chargeback probability $f_{CB}(t)$ and opportunity cost $BP(n, t)$ over a defined interval of the current time to to the perish time $t_P$ using the following equation:

$$RI_F = \sum_{t=t_0}^{t_P} f_{CB}(t) \times BP(n, t)$$

To facilitate processing by a computer, the interval between the current time to to the perish time $t_P$ may be defined by a number of discrete points in time, with each point defining a discrete portion of the interval. Similarly, the chargeback probability $f_{CB}(t)$ may defined a plurality of probabilities, each representing a probability that a chargeback will be received during the corresponding discrete portion of the interval.

Scenario 114 may relate to cases in which a fraudulent transaction request is rejected without performing the security check. As may be the case with each scenario 114, 115, 118, 119 in which the transaction request is rejected, because the travel service is not sold, the merchant does not receive the amount of the transaction $A$. The value of the present revenue impact $RI_P$ may therefore be 0. However, there may be further opportunities to sell the travel service prior to the perish time $t_P$. Because the unsold travel service remains part of the remaining inventory at time to, the opportunity cost of the travel service may be provided by the bid-price vector $BP(n + 1, t_0)$. This opportunity cost may provide the value of the future revenue impact $RI_F$ for scenario 114, as shown by:

$$RI_F = BP(n + 1, t_0)$$

Scenario 115 may relate to cases in which a legitimate transaction request is rejected without performing the security check. In contrast to denying a fraudulent transaction, because the traveler is legitimately trying to purchase the travel service, there may be a probability that the original traveler will successfully book the travel service at a later time, i.e., the rebooking probability $P_{RB}$. Rebooking may occur, for example, if the traveler later secures a different form of payment to book the travel service. This possibility may result in a contribution to the future revenue impact $RI_F$ equal to the probability of rebooking $P_{RB}$ times the amount of the transaction $A$. However, because the transaction request was legitimate, if the traveler does not rebook the travel service, the lost amount of the transaction $A$ may negatively affect the value of the future revenue impact $RI_F$. Thus, the future revenue impact $RI_F$ for scenario 115 may be provided by the sum of the expected impact of the traveler rebooking and the expected impact of rejecting the transaction request, or:

$$RI_F = P_{RB} \times A + (1 - P_{RB}) \times (BP(n + 1, t_0) - A)$$

Typically, tickets are not sold for less than the bid-price. Thus, by definition, the difference between the bid-price and the price A may be expected to be less than zero, or

$$(BP(n + 1, t_0) - A) < 0.$$

Scenario 116 may relate to cases in which a fraudulent transaction is accepted despite performance of the security check. The contribution to the value of the future revenue impact $RI_F$ by the probability of receiving a chargeback and the opportunity cost may be similar to those described above with respect to scenario 112. However, the time required to perform the security check may introduce a delay $t_D$ into the acceptance process, so that the transaction request is accepted at time $(t_0 + t_D)$ when the results of the security check are known. The security check time $t_D$ may be determined, for example, at the time the request for the transaction is received to, and may be based on a historical average amount of time for completing the security check. The future revenue impact at time $t_0 + t_D$ would then be provided by:

$$RI_F = \sum_{t=t_0+t_D}^{t_P} f_{CB}(t) \times BP(n, t)$$

However, at to the delay time $t_D$ may be unknown. Thus, the security check delay probability $f_{SC}(t)$ may be used to account for the delay introduced by the security check. In this embodiment, the following equation may be used to determine the future revenue impact:

$$RI_F = \sum_{t=t_0}^{t_P} \sum_{u=t}^{t_P} f_{SC}(t) f_{CB}(u) \times BP(n, u)$$

Scenario 118 may relate to cases in which a fraudulent transaction is rejected after performance of the security check. The contribution to the value of the future revenue impact $RI_F$ by the opportunity cost may be similar to those described above with respect to scenario 114, with the added factor of the delay introduced by the security check. Thus, the future revenue impact $RI_F$ in scenario 118 may be provided by one of:

$$RI_F = BP(n + 1, t_0 + t_D)$$

or

$$RI_F = \sum_{t=t_0}^{t_P} f_{SC}(t) \times BP(n + 1, t)$$

Scenario 119 may relate to cases in which a legitimate transaction is rejected after performance of the security check. The value of the future revenue impact $RI_F$ may be determined in similar manner as described above with respect to scenario 115 with the additional delay introduced by the security check. Thus, the future revenue impact $R_{IF}$ for scenario 119 may be provided by one of:

$$P_{RB} \times A + (1 - P_{RB}) \times (BP(n + 1, t_0 + t_D) - A)$$

or

$$\sum_{t=t_0}^{t_P} f_{SC}(t) \times (P_{RB} \times A + (1 - P_{RB}) \times (BP(n + 1, t_0) - A))$$

The above probabilities, revenue impacts, and costs of fraud may be used to determine how to handle requests to book travel services based on a composite revenue impact of the decision. By way of example, for a newly received request to book a travel service, the composite revenue impact of accepting the transaction may be determined based on the total cost of fraud $C_F$ and future revenue impact $RI_F$ for scenarios 112 and 113. The values of $C_F$ and $RI_F$ from scenario 112 may be weighted by the probability the transaction is fraudulent P. Thus, composite revenue impact of accepting the transaction may be provided by:

$$CRI = P \times \left[ A + C_{CB} - \sum_{t=t_0}^{t_P} f_{CB}(t) \times BP(n, t) \right]$$

The values from scenarios 114 and 115 may be used in a similar fashion to determine the composite revenue impact of rejecting the transaction. Weighting the future revenue impact $RI_F$ of scenario 114 by the probability of fraud P, and the future revenue impact $RI_F$ of scenario 115 with the probability the transaction is legitimate (1 - P) may result in the following equation for the composite revenue impact:

$$CRI = P \times BP(n + 1, t_0) + (1 - P) \times [P_{RB} \times A + (1 - P_{RB}) \times (BP(n + 1, t_0) - A)]$$

which may be simplified to:

$$CRI = BP(n + 1, t_0)[P + (1 - P)(1 - P_{RB})] + A \times (1 - P) \times (2P_{RB} - 1)$$

The security check may have a probability $P_{SCN}$ of returning a negative result indicating that fraud is not suspected, and a probability $P_{SCP}$ of returning a positive result indicating that fraud is suspected. $P_{SCN}$ may be equal to a ratio of a total number of negative results $N_{NR}$ to a total population of transactions $N_{SC}$ subjected to the security check, or:

$$P_{SCN} = \frac{N_{NR}}{N_{SC}}$$

$P_{SCN}$ may be equal to a ratio of a total number of positive results $N_{PR}$ to the total population of transactions $N_{SC}$ subjected to the security check, or:

$$P_{SCP} = \frac{N_{PR}}{N_{SC}}$$

For a security check that can only output either a positive or negative result, the total population of transactions subjected to the security check $N_{SC}$ may be equal to the sum of the total number of negative results $N_{NR}$ and the total number of positive results $N_{PR}$ so that $P_{SCP} + P_{SCN} = 1$.

To determine the composite revenue impact of performing the security check, the accuracy of the security check must be determined. That is, the security check may occasionally return incorrect results that should be accounted for.

The total number of negative results $N_{NR}$ may include a number of true negative results $N_{TN}$, with a remainder of the negative results $N_{NR}$ being false negative results $N_{FN}$. True negative results may occur when the security check provides a correct indication that the transaction being checked is legitimate. False negative results may occur when the security check provides a false indication that the transaction being checked is legitimate when the transaction is actually fraudulent. A probability of fraud $P_{FN}$ for a transaction given a negative security check result may be provided by the ratio of false negative results $N_{FN}$ to the total number of negative results $N_{NR}$ as shown by:

$$P_{FN} = \frac{N_{FN}}{N_{NR}}$$

Similarly, the total number of positive results $N_{PR}$ may include a number of true positive results $N_{TP}$, with a remainder of the positive results $N_{PR}$ being false positive results $N_{FP}$. True positive results may occur when the security check provides a correct indication that the transaction being checked is fraudulent. False positive results occur when the security check provides a false indication that the transaction being checked is fraudulent when the transaction is actually legitimate. A probability of fraud $P_{FP}$ given a positive security check result may be provided by the ratio of true positive results $N_{TP}$ to total positive results $N_{PR}$ as shown by:

$$P_{FP} = \frac{N_{TP}}{N_{PR}}$$

The composite revenue impact of performing the security check may be determined from the values of $C_F$ and $RI_F$ of scenarios 116-119 weighted by the probability $P_{SCN}$ of returning a negative result, the probability $P_{SCP}$ of returning a positive result, and the corresponding probabilities of fraud $P_{FN}$, $P_{FP}$. The composite revenue impact of requesting a security check may be provided by:

$$CRI = C_{SC} + P_{SCN} \times P_{FN} \times [(A + C_{CB})$$
$$+ \sum_{t=t_0}^{t_P} \sum_{u=t}^{t_P} f_{SC}(t) f_{CB}(u) \times BP(n, u)] + P_{SCP} \times [[P_{FP} + P_{FN}(1 - P_{RB})]$$
$$\times \sum_{t=t_0}^{t_P} f_{SC}(t) \times BP(n + 1, t) + A \times P_{FN} \times [2P_{RB} - 1]]]$$

In general, the routines executed to implement the embodiments of the invention, whether implemented as part of an operating system or a specific application, component, program, object, module or sequence of instructions, or even a subset thereof, may be referred to herein as "computer program code," or simply "program code." Program code typically comprises computer-readable instructions that are resident at various times in various memory and storage devices in a computer and that, when read and executed by one or more processors in a computer, cause that computer to perform the operations necessary to execute operations and/or elements embodying the various aspects of the embodiments of the invention. Computer-readable program instructions for carrying out operations of the embodiments of the invention may be, for example, assembly language or either source code or object code written in any combination of one or more programming languages.

Various program code described herein may be identified based upon the application within that it is implemented in specific embodiments of the invention. However, it should be appreciated that any particular program nomenclature that follows is used merely for convenience, and thus the invention should not be limited to use solely in any specific application identified and/or implied by such nomenclature. Furthermore, given the generally endless number of manners in which computer programs may be organized into routines, procedures, methods, modules, objects, and the like, as well as the various manners in which program functionality may be allocated among various software layers that are resident within a typical computer (e.g., operating systems, libraries, API's, applications, applets, etc.), it should be appreciated that the embodiments of the invention are not limited to the specific organization and allocation of program functionality described herein.

The program code embodied in any of the applications/modules described herein is capable of being individually or collectively distributed as a program product in a variety of different forms. In particular, the program code may be distributed using a computer-readable storage medium having computer-readable program instructions thereon for causing a processor to carry out aspects of the embodiments of the invention.

Computer-readable storage media, which is inherently non-transitory, may include volatile and non-volatile, and removable and non-removable tangible media implemented in any method or technology for storage of information, such as computer-readable instructions, data structures, program modules, or other data. Computer-readable storage media may further include RAM, ROM, erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer-readable storage medium should not be construed as transitory signals per se (e.g., radio waves or other propagating electromagnetic waves, electromagnetic waves propagating through a transmission media such as a waveguide, or electrical signals transmitted through a wire). Computer-readable program instructions may be downloaded to a computer, another type of programmable data processing apparatus, or another device from a computer-readable storage medium or to an external computer or external storage device via a network.

Computer-readable program instructions stored in a computer-readable medium may be used to direct a computer, other types of programmable data processing apparatus, or other devices to function in a particular manner, such that the instructions stored in the computer-readable medium produce an article of manufacture including instructions that implement the functions, acts, and/or operations specified in the flowcharts, sequence diagrams, and/or block diagrams. The computer program instructions may be provided to one or more processors of a general purpose computer, a special purpose computer, or other programmable data processing apparatus to produce a machine, such that the instructions, which execute via the one or more processors, cause a series of computations to be performed to implement the functions, acts, and/or operations specified in the flowcharts, sequence diagrams, and/or block diagrams.

In certain alternative embodiments, the functions, acts, and/or operations specified in the flowcharts, sequence diagrams, and/or block diagrams may be re-ordered, processed serially, and/or processed concurrently consistent with embodiments of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising".

While all of the invention has been illustrated by a description of various embodiments and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the Applicant's general inventive concept.

**Claims**

**1.** A method of processing a request to book a travel service having a price and a perish time, the method comprising:

receiving, at a computer, the request to book the travel service for a traveler;
determining, by the computer, a first remaining inventory of the travel service if the request is accepted;
determining, by the computer, a first bid-price of the travel service based on the first remaining inventory and a first amount of time between a current time and the perish time;
determining, by the computer, a first probability that a chargeback will be received if the request is accepted;
determining, by the computer, a first future revenue impact of accepting the request that comprises a first mathematical product of the first probability and the first bid-price and corresponds to a first scenario wherein the request is fraudulent;
determining, by the computer based at least in part on the first future revenue impact, a first composite revenue impact of accepting the request; and
determining, by the computer, whether to accept the request, reject the request, or perform a security check based at least in part on the first composite revenue impact.

2. The method of claim 1 further comprising:

determining a second remaining inventory of the travel service if the request is rejected;
determining a second bid-price of the travel service based on the second remaining inventory and the first amount of time;
determining a second future revenue impact of rejecting the request that comprises the second bid-price and corresponds to the first scenario; and
determining, based at least in part on the second future revenue impact, a second composite revenue impact of rejecting the request,
wherein determining whether to accept the request, reject the request, or perform the security check is further based at least in part on the second composite revenue impact.

3. The method of claim 1 further comprising:

determining a second remaining inventory of the travel service if the request is rejected;
determining a second bid-price of the travel service based on the second remaining inventory and the first amount of time;
determining a second probability that the travel service will be rebooked by the traveler if the request is rejected and a third probability that the travel service will not be rebooked by the traveler if the request is rejected;
determining a second mathematical product of the second probability and the price;
determining a difference between the second bid-price and the price by subtracting the price from the second bid-price;
determining a third mathematical product of the third probability and the difference;
determining a second future revenue impact of rejecting the request that comprises a sum of the second mathematical product and the third mathematical product and that corresponds to a second scenario wherein the request is not fraudulent; and
determining, based at least in part on the second future revenue impact, a second composite revenue impact of rejecting the request,
wherein determining whether to accept the request, reject the request, or perform the security check is further based at least in part on the second composite revenue impact.

4. The method of any of claims 1 to 3 wherein the first bid-price is one of a plurality of first bid-prices each determined for a different point in time, the first probability is one of a plurality of first probabilities comprising a probability distribution with respect to time for receiving the chargeback, and further comprising:

for each point of a plurality of points in time comprising an interval of the current time to the perish time, determining the first mathematical product of the first bid-price and the first probability provided by the probability distribution,
wherein the first future revenue impact comprises a sum of the first mathematical products over the interval.

5. The method of any of claims 1 to 3 wherein the first bid-price is one of a plurality of first bid-prices each determined for a different point in time, the first probability is one of a plurality of first probabilities comprising a probability distribution with respect to time for receiving the chargeback, and further comprising:

for each point of a plurality of points in time comprising an interval of the current time plus a delay to the perish time, determining the first mathematical product of the first bid-price and the first probability provided by the probability distribution;
determining a second future revenue impact of accepting the request that comprises a sum of the first mathematical products over the interval and corresponds to a second scenario wherein the request is fraudulent and the security check having the delay is performed prior to accepting the request; and
determining, based at least in part on the second future revenue impact, a second composite revenue impact of performing the security check,
wherein determining whether to accept the request, reject the request, or perform the security check is further based at least in part on the second composite revenue impact.

6. The method of any of claims 1 to 3 wherein the first bid-price is one of a plurality of first bid-prices each determined for a different point in time, the first probability is one of a plurality of first probabilities comprising a first probability distribution with respect to time for receiving the chargeback, and further comprising:

for each point of a plurality of points in time comprising a first interval of the current time to the perish time, determining a second mathematical product of a second probability distribution with respect to time of a delay for performing the security check and a first sum of a third mathematical product of the first bid-price and the first probability distribution over a second interval from the point in time to the perish time;

determining a second future revenue impact of accepting the request that comprises a second sum of the second mathematical products over the first interval and corresponds to a second scenario wherein the request is fraudulent and the security check having the delay is performed prior to accepting the request; and

determining, based at least in part on the second future revenue impact, a second composite revenue impact of performing the security check,

wherein determining whether to accept the request, reject the request, or perform the security check is further based at least in part on the second composite revenue impact.

7. The method of claim 1 further comprising:

determining a second remaining inventory of the travel service if the request is rejected;

determining a second bid-price of the travel service based on the second remaining inventory and a second amount of time between the current time plus a delay and the perish time;

determining a second future revenue impact of rejecting the request that comprises the second bid-price and corresponds to a second scenario wherein the request is fraudulent and the security check having the delay is performed prior to rejecting the request; and

determining, based at least in part on the second future revenue impact, a second composite revenue impact of performing the security check,

wherein determining whether to accept the request, reject the request, or perform the security check is further based at least in part on the second composite revenue impact.

8. The method of claim 1 further comprising:

determining a second remaining inventory of the travel service if the request is rejected;

for each point of a plurality of points in time comprising an interval of the current time to the perish time, determining a second bid-price of the travel service based on the second remaining inventory and a second amount of time between the point and the perish time, and a second mathematical product of the second bid-price and a probability distribution with respect to time of a delay for performing the security check;

determining a second future revenue impact of rejecting the request that comprises a sum of the second mathematical products over the interval; and

determining, based at least in part on the second future revenue impact, a second composite revenue impact of performing the security check,

wherein determining whether to accept the request, reject the request, or perform the security check is further based at least in part on the second composite revenue impact.

9. The method of claim 1 further comprising:

determining a second remaining inventory of the travel service if the request is rejected;

determining a second bid-price of the travel service based on the second remaining inventory and a second amount of time between the current time plus a delay and the perish time;

determining a second probability that the travel service will be rebooked by the traveler if the request is rejected and a third probability that the travel service will not be rebooked by the traveler if the request is rejected;

determining a second mathematical product of the second probability and the price;

determining a difference between the second bid-price and the price by subtracting the price from the second bid-price;

determining a third mathematical product of the third probability and the difference;

determining a second future revenue impact of performing the security check that comprises a sum of the second mathematical product and the third mathematical product and corresponds to a second scenario wherein the request is not fraudulent and the security check having the delay is performed prior to rejecting the request; and

determining, based at least in part on the second future revenue impact, a second composite revenue impact of performing the security check,
wherein determining whether to accept the request, reject the request, or perform the security check is further based at least in part on the second composite revenue impact.

10. The method of claim 1 further comprising:

determining a second remaining inventory of the travel service if the request is rejected;
determining a second bid-price of the travel service based on the second remaining inventory and a second amount of time between the current time and the perish time;
determining a second probability that the travel service will be rebooked by the traveler if the request is rejected and a third probability that the travel service will not be rebooked by the traveler if the request is rejected;
determining a second mathematical product of the second probability and the price;
determining a difference between the second bid-price and the price by subtracting the price from the second bid-price;
determining a third mathematical product of the third probability and the difference;
determining a first sum of the second mathematical product and the third mathematical product;
for each point of a plurality of points in time in an interval of the current time to the perish time, determining a fourth mathematical product of the first sum and a probability distribution with respect to time of a delay for performing the security check
determining a second future revenue impact of performing the security check that comprises a second sum of the fourth mathematical products over the interval and corresponds to a second scenario wherein the request is not fraudulent and the security check having the delay is performed prior to rejecting the request; and
determining, based at least in part on the second future revenue impact, a second composite revenue impact of performing the security check,
wherein determining whether to accept the request, reject the request, or perform the security check is further based at least in part on the second composite revenue impact.

11. The method of any of claims 1 to 10 wherein determining the first composite revenue impact comprises:

determining a sum of the price and a cost of chargeback fees;
determining a difference by subtracting the first future revenue impact from the sum; and
multiplying the difference by a forth probability that the request is fraudulent.

12. The method of any of claims 1 to 11 wherein the first scenario is one of a plurality of scenarios, and the first composite revenue impact is one of a plurality of composite revenue impacts each corresponding to a different one of the plurality of scenarios, and determining whether to accept the request, reject the request, or perform the security check based at least in part on the first composite revenue impact comprises:

determining, for each scenario, a total cost of fraud based at least in part on the composite revenue impact corresponding to the scenario; and
accepting the request, rejecting the request, or performing the security check in accordance with the scenario having a lowest total cost of fraud.

13. An apparatus for processing a request to book a travel service having a price and a perish time, the apparatus comprising:

a processor; and
a memory including instructions that, when executed by the processor, cause the apparatus to:

receive the request to book the travel service for a traveler;
determine a first remaining inventory of the travel service if the request is accepted;
determine a first bid-price of the travel service based on the first remaining inventory and a first amount of time between a current time and the perish time;
determine a first probability that a chargeback will be received if the request is accepted;
determine a first future revenue impact of accepting the request that comprises a first mathematical product of the first probability and the first bid-price and corresponds to a first scenario wherein the request is fraudulent;
determine, based at least in part on the first future revenue impact, a first composite revenue impact of accepting the request; and
determine whether to accept the request, reject the request, or perform a security check based at least in part on the first composite revenue impact.

14. The apparatus of claim 13 wherein the instructions, when executed by the processor, cause the apparatus to perform the method of any of claims 2 to 11.

15. A computer program for processing a request to book a travel service having a price and a perish time, the computer program comprising
instructions that, when executed by a processor, cause the processor to:

receive the request to book the travel service for a traveler;
determine a first remaining inventory of the travel service if the request is accepted;
determine a first bid-price of the travel service based on the first remaining inventory and a first amount of time between a current time and the perish time;
determine a first probability that a chargeback will be received if the request is accepted;
determine a first future revenue impact of accepting the request that comprises a first mathematical product of the first probability and the first bid-price and corresponds to a first scenario wherein the request is fraudulent;
determine, based at least in part on the first future revenue impact, a first composite revenue impact of accepting the request; and
determine whether to accept the request, reject the request, or perform a security check based at least in part on the first composite revenue impact.

**FIG. 1**

**FIG. 2**

FIG. 3

FIG. 4

FIG. 5

| SECURITY CHECK | DECISION | FRAUD | COST OF FRAUD $C_F$ | REVENUE IMPACT | |
|---|---|---|---|---|---|
| | | | | PRESENT $RI_P$ | FUTURE $RI_F$ |
| NO | ACCEPT | YES | $A + C_{CB}$ | $A$ | $\displaystyle\sum_{t=t_0}^{t_P} f_{CB}(t) \times BP(n,t)$ |
| | | NO | $0$ | $A$ | $0$ |
| | REJECT | YES | $0$ | $0$ | $BP(n+1,t_0)$ |
| | | NO | $0$ | $0$ | $P_{RB} \times A + (1 - P_{RB}) \times (BP(n+1,t_0) - A)$ |
| YES | ACCEPT | YES | $A + C_{CB} + C_{SC}$ | $A$ | $\displaystyle\sum_{t=t_0+t_D}^{t_P} f_{CB}(t) \times BP(n,t)$ $\displaystyle\sum_{t=t_0}^{t_P}\sum_{u=t}^{t_P} f_{SC}(t) f_{CB}(u) \times BP(n,u)$ |
| | | NO | $C_{SC}$ | $A$ | $0$ |
| | REJECT | YES | $C_{SC}$ | $0$ | $BP(n+1, t_0 + t_D)$ $\displaystyle\sum_{t=t_0}^{t_P} f_{SC}(t) \times BP(n+1,t)$ |
| | | NO | $C_{SC}$ | $0$ | $P_{RB} \times A + (1 - P_{RB}) \times (BP(n+1, t_0 + t_D) - A)$ $\displaystyle\sum_{t=t_0}^{t_P} f_{SC}(t) \times (P_{RB} \times A + (1 - P_{RB}) \times (BP(n+1,t_0) - A))$ |

**FIG. 6**

Europäisches
Patentamt

European
Patent Office

Office européen
des brevets

# EUROPEAN SEARCH REPORT

Application Number

EP 15 29 0030

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/158540 A1 (GANTI VISWESWARARAO [US] ET AL) 21 June 2012 (2012-06-21) * the whole document * | 1-15 | INV. G06Q30/00 G06Q30/06 G06Q40/02 G06Q20/40 |
| X | EP 2 824 624 A1 (AMADEUS SAS [FR]) 14 January 2015 (2015-01-14) * the whole document * | 1-15 | |
| X | EP 2 775 440 A1 (AMADEUS SAS [FR]) 10 September 2014 (2014-09-10) * the whole document * | 1-15 | |
| A | VISA INTERNATIONAL SERVICE ASSOCIATION: "3-D Secure Introduction, Version 1.0.2", INTERNET CITATION, 26 September 2002 (2002-09-26), XP002475409, Retrieved from the Internet: URL:http://www.web-merchant.co.uk/optimal% 20technical%20data/3D_secure_Guide.pdf [retrieved on 2008-04-07] * the whole document * | 1-15 | TECHNICAL FIELDS SEARCHED (IPC) G06Q |

The present search report has been drawn up for all claims

| Place of search | Date of completion of the search | Examiner |
|---|---|---|
| Munich | 29 April 2015 | Aguilar, José María |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 3 057 054 A1

## ANNEX TO THE EUROPEAN SEARCH REPORT
## ON EUROPEAN PATENT APPLICATION NO.

EP 15 29 0030

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2015

| Patent document cited in search report | | Publication date | Patent family member(s) | | Publication date |
|---|---|---|---|---|---|
| US 2012158540 | A1 | 21-06-2012 | NONE | | |
| EP 2824624 | A1 | 14-01-2015 | AU EP | 2014203818 A1 2824624 A1 | 29-01-2015 14-01-2015 |
| EP 2775440 | A1 | 10-09-2014 | NONE | | |

EPO FORM P0459

For more details about this annex : see Official Journal of the European Patent Office, No. 12/82